# EUROPEAN PATENT APPLICATION

(11) **EP 4 601 342 A1**
(43) Date of publication of application: **13.08.2025**
(21) Application number: 24157023.3
(22) Date of filing: 12.02.2024
(51) Int. Cl.: H04W 12/041, H04W 12/047, H04W 12/30, H04W 12/40, H04W 12/72, H04W 8/18, H04W 8/20, H04L 9/00, H04L 9/08

(54) **PROVIDING AN EUICC WITH PROFILE DATA OF AT LEAST ONE PROFILE**

(71) Applicant: Giesecke+Devrient Mobile Security Germany GmbH, 81677 München (DE)
(72) Inventor: AbdAlla, Noha, 81677 München (DE); Leibfarth, Robert, 81677 München (DE); Morawietz, Andreas, 81677 München (DE); Hartel, Karl Eglof, 81677 München (DE); Huber, Ulrich, 81677 München (DE)
(74) Representative: Giesecke+Devrient IP

(57) **Abstract**

A method for establishing, in a target eUICC, profile data of at least one profile, the profile data including at least an authentication key K, the method comprising the step:
a) receive at the eUICC MNO information including at least an indication which profile data shall be generated; the method characterized by the step performed after step a):
b) generate, in the target eUICC, at least some of the profile data, herein at least a network authentication key K; c) after step b) export the profile data generated in the target eUICC, or at least part thereof, from the target eUICC to an external entity; d) receive at the external entity at least some or all of the exported profile data, herein at least the authentication key K; and e) initiate generation of a profile including the received authentication key, at the external entity, or at an entity called by the external entity.

## Description

### Field of the invention

The present invention relates to providing an eUICC with profile data of at least one profile, the eUICC being designed to be hosted in a wireless network communication device, or briefly mobile device.

### Background of the invention and prior art

The world is connected via wireless communication networks, also referred to as mobile communication networks, wherein devices hosting eUICCs communicate with each other and with wireless network background servers in a secured way. The eUICCs hosted in the devices comprise at least one or several subscription profiles, or briefly profiles, including profile data like an international mobile subscriber identity, which may be embodied as IMSI, or in 5G as SUPI or NAI, and an authentication key K, and a profile number ICCID, OTA keys, and further profile data, enabling communication in the wireless communication network.

For eUICCs, several form factors are known, including plug-in SIM-card or pSIM, embedded and soldered-in eUICC in a strict sense or eSIM, and integrated iUICC or iSIM integrated into a chip of a chipset of the device hosting the eUICC. In the context of the present invention, unless explicitly stated other, eUICC is understood to include any form factor, including any of the listed form factors.

Devices are for example known as consumer wireless network communication devices like smartphones and network-able tablet PCs, and as M2M wireless network communication devices including automotive wireless network communication devices and industrial wireless network communication devices. In the following, a device is meant to be a wireless network communication device, hosting an eUICC including one or several profiles, and constructed to communicate with other devices or network servers over a mobile communication network, herein including the eUICC for security relevant tasks like authentication.

The document [1] [SGP.22] GSMA SGP.22 RSP Technical Specification Version 3.0, 19th October 2022, describes procedures and architectures for provisioning profiles to eUlCCs hosted in consumer devices already in the field. The profile server from which profiles are downloaded to eUICCs in an SGP.22 scenario is also referred to as SM-DP+.

According to [1] [SGP.22], section 2.5 "Profile Protection and Delivery", an Operator's Profile is protected within a Profile Package prior to being downloaded to the eUICC. As further set out in sub-section 2.5.1, "Profile Package Types Overview", from generation to download, a Profile Package will take the following different formats:
- Unprotected Profile Package (UPP): Raw eUICC Profile Package TLV sequence.
- Protected Profile Package (PPP): Segmented and protected in BSP payload TLVs.
- Bound Profile Package (BPP): Prepended with session key agreement info, key replacement package, ISD-P creation and configuration info.
- Segmented Bound Profile Package (SBPP): BPP segmented into STORE DATA APDU script for loading into eUICC. This step is performed by the LPD when the LPD is in the Device.

Document [1] [SGP.22] allows the Protected Profile Package to be encrypted either with a key which is unspecific for any eUICC, or with a key which is specific to an eUICC. The process for transforming the Protected Profile Package PPP into a Bound Profile Package BBP is also referred to as binding. The purpose of the operation of transforming the Protected Profile Package PPP to the Bound Profile Package BPP is to link a Protected Profile Package to a particular eUICC.

According to [1] [SGP.22], section 2.5.4 "Bound Profile Package", the Bound Profile Package (BPP) is generated by the SM-DP+, within the Profile Package Binding function. This is done within a key agreement between the eUICC and the SM-DP+, which is described in the download and installation procedure (section 3.1.3). According to [1] [SGP.22], section 2.6.4.1 "Key agreement", an Elliptic Curve Key Agreement Algorithm (ECKA) is used for the establishment of a shared secret value. It shall follow the definition for the Anonymous Diffie-Hellman Key Agreement in BSI TR-03111. The algorithm is executed
- by the SM-DP+ using an eUICC one-time public key, otPK.EUICC.KA, and an SM-DP+ one-time private key (sometimes also named "secret" for "private"), otSK.DP.KA, and
- by the eUICC using an SM-DP+ one-time public key, otPK.DP.KA, and an eUICC one-time private key, otSK.EUICC.KA to calculate the shared secret value.

From the shared secret value, the session keys S-ENC and S-MAC are derived, which in turn are used to encrypt and authenticate the Profile Protection Keys, PPK-ENC and PPK-MAC. With the Profile Protection Key PPK-ENC, the payload of the Protected Profile Package is encrypted (unless, according to a specific option, it is directly encrypted with S-ENC).

After an SM-DP+ has established a Bound Profile Package BBP and downloaded the BBP to an eUICC, the eUICC runs the above described key agreement to derive the shared secret value and finally the Profile Protection Key PPK-ENC (or in the specific option S-ENC), and decrypts the encrypted payload of the Protected Profile Package.

Obviously, only the eUICC that contributed the one-time public key otPK.EUICC.KA is able to decrypt the encrypted Protected Profile Package payload.

For the process of binding, to bind the Protected Profile Package PPP to an eUICC, and generate the Bound Profile Package BBP, the presence of the above two public keys and the two private keys is required.

The document [3] [SGP.32] GSMA eSIM IoT Technical Specification, Version 1.0.1, 04 July 2023, from the prior art discloses procedures and architectures for provisioning profiles to eUlCCs hosted in loT devices, similar to [2] [SGP.22] for consumer devices, with some differences in architecture (i.e. IPA instead of LPA) and procedures.

Also according to [2] [SGP.32], Bound Profile Packages, BPPs, are prepared with Profile Protection Key agreed by a procedure similar to that as described above for [1] [SGP.22].

A risk remains that keys used to prepare the Bound Profile Package are shared to unauthorized parties, enabling loading and installing a profile to a non-authorized eUICC. This risk exists for both consumer and loT eUICCs.

Document [4] EP2283666B1 discloses a method for taking a SIM (UICC) into first operation in a mobile network. The SIM stores a non-individual parameter data set which includes at least a non-individual subscriber identity IMSI and a non-individual network authentication key K, which may be the same for several SIMs. Upon first operation of the SIM in the mobile network, the SIM is personalized, wherein an individual parameter data set is established, wherein an individual subscriber identity IMSI and an individual network authentication key K are transferred to the SIM and stored in the SIM.

Document [5] EP3669562B1 describes a method for taking a SIM (UICC) into first operation in a mobile network. The SIM already stores an individual subscriber identity IMSI, however only a non-individual network authentication key K, which may be the same for several SIMs. In a personalization step, an individual network authentication key K is transferred to the SIM with the individual subscriber identity IMSI, and the non-individual network authentication key K is replaced with an individual network authentication key K. Due to controlled sending of the individual network authentication key K only to the SIM with the specified individual subscriber identity IMSI, unauthorized cloning of parameter data sets and distributing the cloned parameter data sets to a larger number of SIMs than allowed may be prevented.

### Objective of the invention

It is an object of the present invention to provide a secure method for profile provisioning to an eUICC, which is preferably applicable to both consumer and loT eUICCs.

### Summary of the invention

The object of the invention is achieved by a method with following features, according to claim 1. Embodiments of the invention are presented in dependent claims.

In greater detail, the object of the invention is achieved by a method for establishing, in a target eUICC, profile data of at least one profile, the profile data including at least an authentication key K.

The method comprises the step: a) receive, at the eUICC, MNO information including at least an indication which profile data shall be established.

The method is characterized by the step performed after step a):
b) generate, in the target eUICC, at least some of the profile data, herein at least a network authentication key K;
c) after step b) export the profile data generated in the target eUICC, or at least part thereof, from the target eUICC to an external entity;
d) receive at the external entity at least some or all of the exported profile data, herein at least the authentication key K; and
e) initiate generation of a profile including the received authentication key, at the external entity, or at an entity called by the external entity.

Whereas the binding solutions of the prior art rely on securing the Bound Profile Package BPP with a footprint of the target eUICC, or on transferring eUICC unique profile data from a profile server to the eUICC, the present invention proposes to generate at least some of the profile data, herein at least the network authentication key K, on-board in the eUICC.

The inventive solution has the following advantages:
a) Late profile generation is enabled, removing the necessity to assign a profile to a target eUICC in advance, at an early stage.
b) Due to the just-in-time individualization achieved by the network authentication key K generated in the target eUICC, distribution of clones into the field is prevented;
c) due to generation of the network authentication key K within the eUICC, leakage of the network authentication key K to entities seeking to produce clones is prevented, which contributes to that the presented solution is a secure method.

Accordingly, the present invention provides a secure method for profile provisioning to an eUICC, here referred to as target eUICC.

Some other profile data or other data may be pre-stored on the eUICC, and the on-board generated data or profile data may be combined with the pre-stored data or profile data.

The MNO information may include information included in a profile download order, for example a profile download order according to [1] [SGP.22], such as EID, ICCID, profile type, and similar MNO information.

According to some embodiments, the external entity is or comprises one or several of the following:
- a Local Profile Assistant LPA or an loT Profile Assistant IPA;
- an SM-DP+ server;
- an OEM server or Operator server or EUM;
- a transmission chain of entities, including several of the above listed entities.

According to some embodiments, the network authentication key K generated in step b) is specific or/and unique to the target eUICC.

According to some embodiments, before step b), generate profile data, is executed, the target eUICC lacks a network authentication key K specific or unique to the target eUICC. The eUICC may particularly be empty, or it may only be lacking the authentication key K.

According to some embodiments, before step b), generate profile data, is executed, the target eUICC contains pre-installed profile data except profile data in the form of a network authentication key K specific or unique to the target eUICC. The pre-installed profile data may in such embodiments be combined with the on-board generated profile data.

According to some embodiments, step b), generate the profile data, is executed triggered by step a), receive the MNO information. In other words, the on-board generation of the authentication key K and possibly further profile data may be triggered by receiving an MNO information, particularly by receiving a profile order including such MNO information, by which a profile is ordered for the eUICC.

According to some embodiments, the profile data generated in step b) in the target eUICC further comprise one or several of the following:
- OTA keys;
- Secure Channel keys;
- symmetric keys, particularly such for any purpose;
- asymmetric key pairs, particularly such for any purpose.

According to some embodiments, the MNO information is received in step a) from any of the following entities:
- a Local Profile Assistant, LPA, or an loT Profile Assistant, IPA;
- an SM-DP+ server;
- an OEM server or Operator server or EUM;
- a transmission chain including several of the above listed entities.

According to some embodiments, the profile data generated in step b) in the target eUICC are embodied as or include one or several of the following:
- one or several random numbers;
- derived profile data derived from one or several random numbers, denoted master key(s).

Other random numbers or/and other data may already be pre-stored in the eUICC. The pre-stored and on-board generated data may be combined with each other.

According to some embodiments, the network authentication key K generated in step b) in the target eUICC is generated by a key generation procedure comprising one or several of the following steps:
- establish the network authentication key K as a random number generated in the target eUICC;
- establish the network authentication key K as a function of a random number generated in the target eUICC and further key derivation data;
- provide the generated network authentication key K as a master key for the derivation of further keys which are specific or/and unique for the target eUICC, wherein the further keys comprise one or several of: OTA keys; Secure Channel keys; any other symmetric or asymmetric key;
- provide the generated network authentication key K as a key derived from a master key, which master key is also used for the derivation of further keys which are specific or/and unique for the target eUICC, wherein the further keys comprise one or several of: OTA keys; Secure Channel keys; any other symmetric or asymmetric key.

According to some embodiments, the profile data, or part thereof, exported from the target eUICC in step c) are exported in an encrypted form, encrypted with an export key.

According to some embodiments, the export key is embodied as one or several keys fulfilling one or several of the following features:
- an export key generated in the target eUICC;
- in the case where a Batch Bound Profile Package was received at the target eUICC, the same key with which the Batch Bound Profile Package was encrypted, or a key derived from said key with which the Batch Bound Profile Package was encrypted;
- random keys PPK-ENC and PPK-MAC according to SGP.22;
- session keys S-ENC and S-MAC according to SGP.22;
- an export key derived from one-time keys generated on the eUICC new for each export or/and other keys included in the Batch Bound Profile Package.

The method, according to some embodiments, further comprises, for at least some of the generated or/and received profile data, set or keep said at least part of the profile data in a blocked or disabled state, in which blocked or disabled state said profile data are not operable, and release or enable said blocked or disabled profile data upon occurrence of a specified event, wherein the specified event is one of the following:
- authentication, or first authentication, of the eUICC in a mobile network with the generated authentication key K;
- successful authentication, or first successful authentication, of the eUICC in a mobile network with the generated authentication key K;
- verification of the generated profile data by an external entity, which may be or include any or several of: the SM-DP+; the EUM.

The method, according to some embodiments, further comprises, after step e) f) generate a profile including the received authentication key K, at the external entity, or at an entity called by the external entity.

According to some embodiments, the generated profile further comprises one or several or all of the following further profile data:
- a subscriber identity (IMSI; SUPI; NAI);
- a profile number ICCID.

The method, according to some embodiments, further comprises one or several or all of the following steps:
g) download to the eUICC: the generated profile; or the generated profile excluding the profile data that were generated in the eUICC;
h) install the downloaded profile in the eUICC;
i) enable the installed profile in the eUICC.

### Brief description of the drawings

Embodiments of the invention will now be described with reference to the accompanying drawings, throughout which like parts are referred to by like references, and in which represents:
- Fig. 1: a profile provisioning setup according to [1] SGP.22, suitable for the invention;
- Fig. 2: a profile provisioning setup according to [2] SGP.32, suitable for the invention.

### Detailed description of the invention

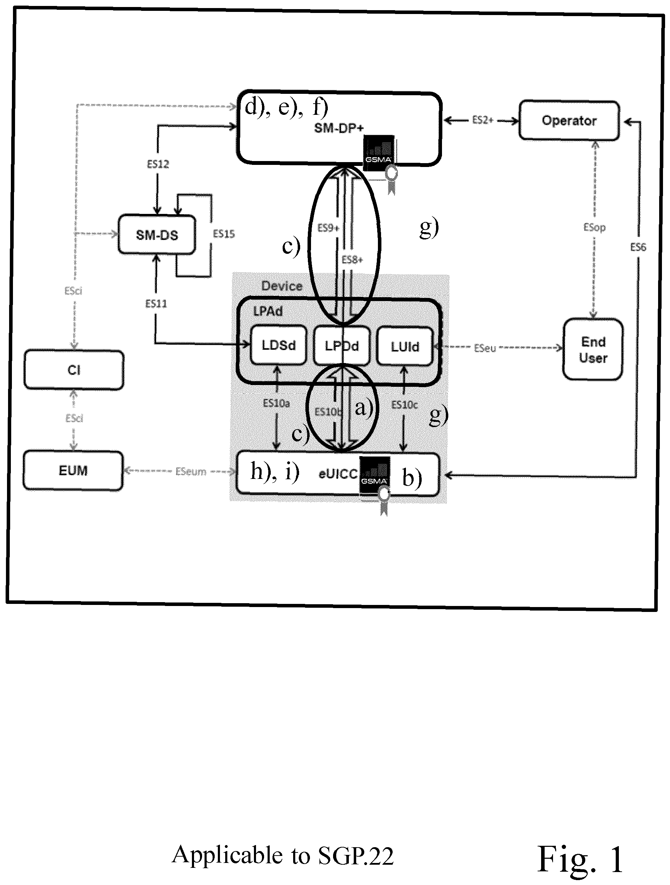

Fig. 1 shows a profile provisioning setup according to [1] SGP.22, suitable for the invention. The setup comprises a device, which is a consumer device, in which a Local Profile Assistant LPA, embodied as LPA-device, LPAd, in the device is included. Further, the setup comprises an eUICC hosted in the device. Further, the setup comprises a profile server SM-DP+. The setup further comprises an end user (consumer). On the device, a profile management application, MNP APP, is implemented allowing an end user (consumer) handling the device to manage profiles in the eUICC, including selection of an MNO, and download, installation, enablement, disablement and deletion of profiles of the selected MNO.

The setup may further comprise, and preferably comprises, an Operator, an SM-DS, an EUM and an CI.

A pre-condition for the implementation of the present invention in the profile provisioning setup according to [1] SGP.22 shown in Fig. 1 is that eUICC has capability to generate Keys (e.g. an authentication key K and OTA Keys), whereas according to [1] SGP.22 the eUICC is not required, but also is not forbidden, to have such capability.

In the following, with reference to Fig. 1, a method for establishing profile data of a profile in the eUICC will be described, according to an embodiment of the invention.

The end user (consumer) selects an MNO in the MNP App.

The MNO App, with MNO information of the selected MNO, initiates the Local Profile Assistant LPAd to start profile management. The MNO data includes at least an indication which profile data shall be generated.

The indication of profile data may be explicit, by indicating specified profile data, or implicit, in that a standard set of profile data is generated, when no profile data to be generated are explicitly specified.

In the embodiment of Fig. 1, the MNO information comprises an indication that an authentication key K, a defined number of OTA keys, and an URL of an SM-DP+ profile server of the or associated to the selected MNO.

In reaction to the initiation by the MNP APP, the LPA initiates the eUICC to generate the profile data of a profile.

For this, the LPA sends the MNO information to the eUICC, and, step a), the eUICC receives the MNO information.

According to a first option, only the MNO information is sent and received, and is in the eUICC interpreted as a request to generate profile data.

According to a second option, along with the MNO information, an explicit request to generate profile data is sent and received at the eUICC.

Thereafter, in a step b), in the eUICC, the indicated profile data are generated, herein the authentication key K and the defined number of OTA keys.

In preparation of subsequent step c), the eUICC encrypts the generated profile data authentication key K and OTA keys.

In a step c) after step b) the eUICC sends or exports the generated and then encrypted profile data (Authentication key K, OTA keys) and the URL of the SM-DP+ to an external entity outside the eUICC. In the embodiment of Fig. 1, the eUICC first sends the encrypted profile data (key data including Authentication key K, OTA keys) to the Local Profile Assistant LPA, and the LPA sends the encrypted profile data further to the SM-DP+ associated to the URLS (transmission chain eUICC-LPA-SM-DP+).

In step d), the SM-DP+ as the final target external entity receives the exported profile data, including the authentication key K and the OTA keys.

In step e), the SM-DP+ initiates generation of a profile including the received authentication key K. In step f), the SM-DP+ generates a profile including the received authentication key K, and further profile data provided at the SM-DP+. The further profile data may include: a subscriber identifier IMSI or SUPI or NAI; a profile number ICCID.

In a step g), the SM-DP+ downloads to the eUICC the generated profile including or excluding the profile data that were generated in the eUICC, to the eUICC via the Local Profile Assistant LPA.

In a step h), the eUICC installs the downloaded profile in the eUICC, potentially fills gaps with previously generated key material. Further the eUICC sends a notification to the SM-DP+ about the installation result.

In a step i), the end user (consumer) enables the installed profile in the eUICC.

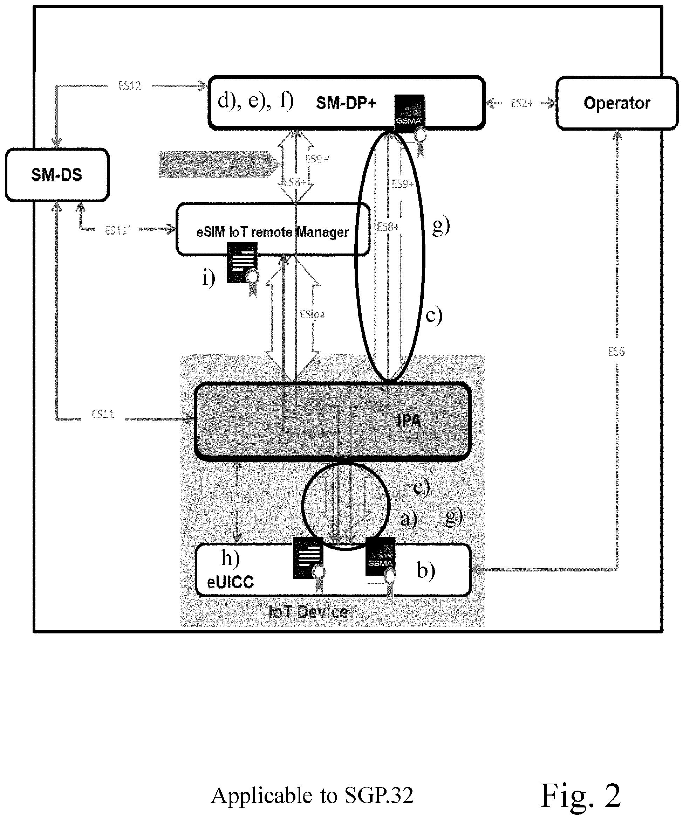

Fig. 2 shows a profile provisioning setup according to [2] SGP.32, suitable for the invention. The setup includes an eUICC hosted in an loT device, an SM-DP+ profile server and an eSIM loT remote Manager, elM. The setup may further comprise, and preferably comprises, an Operator and an SM-DS.

A pre-condition for the implementation of the present invention in the profile provisioning setup according to [2] SGP.32 shown in Fig. 2 is that eUICC has capability to generate Keys (e.g. an authentication key K and OTA Keys), whereas according to [2] SGP.32 the eUICC is not required, but also is not forbidden, to have such capability.

In the following, with reference to Fig. 2, a method for establishing profile data of a profile in the eUICC will be described, according to an embodiment of the invention.

The elM sends MNO information (e.g. IMSI, URL of DP+, ...) towards the eUICC, via the IPAd or directly via the IPAe, and requests Key generation.

In a step a), the eUICC receives the MNO information and request.

In step b), the eUICC generates Keys, as profile data, and, step c), sends them (via IPAd or via IPAe) together with MNO information encrypted to the selected SM-DP+.

Steps d), e), f): the SM-DP+ generates profile with the received keys that were generated in the eUICC, and with further profile data. The further profile data may contain IMSI/ICCID.

According to an option, binding of an IMSI/ICCID to the generated keys was already done within the eUICC in an MNO Profile, and the profile data exported, in step c) comprises IMSI/ICCID together with the generated keys. Such use case is generally applicable to scenarios of [1] and [2], and may be particularly favorable in loT, e.g. [2] [SGP.32], scenarios.

In step g), the SM-DP+ sends the required profile data, including eUICC generated Keys and subscriber identifier IMSI, SUPI or NAI towards the Operator (= server of the MNO) for network activation of the profile.

Further in step g), the SM-DP+ sends the profile, with or without the Key material that was generated by the eUICC, to the eUICC.

In step h), the eUICC installs Profile, and potentially fills gaps with previously generated Key material.

Further, the eUICC sends a notification to the SM-DP+ about the installation result. Further, the eUICC sends a notification to the elM about the installation result.

Further, the elM sends i) a request to the eUICC for MNO Profile enablement.

### Cited documents

[1] [SGP.22] GSMA SGP.22 RSP Technical Specification Version 3.0, 19th October 2022
[2] [SGP.32] GSMA eSIM loT Technical Specification, Version 1.0.1, 04 July 2023
[3] EP2283666B1
[4] EP3669562B1

## Claims

1. A method for establishing, in a target eUICC, profile data of at least one profile, the profile data including at least an authentication key K, the method comprising the step:
a) receive at the eUICC MNO information including at least an indication which profile data shall be established;
the method **characterized by** the step performed after step a):
b) generate, in the target eUICC, at least some of the profile data, herein at least a network authentication key K;
c) after step b) export the profile data generated in the target eUICC, or at least part thereof, from the target eUICC to an external entity;
d) receive at the external entity at least some or all of the exported profile data, herein at least the authentication key K; and
e) initiate generation of a profile including the received authentication key, at the external entity, or at an entity called by the external entity.

2. The method according to claim 1, wherein the external entity is or comprises one or several of the following:
- a Local Profile Assistant LPA or an loT Profile Assistant IPA;
- an SM-DP+ server;
- an OEM server or Operator server or EUM;
- a transmission chain including several of the above listed entities.

3. The method according to claim 1 or 2, wherein the network authentication key K generated in step b) is specific or/and unique to the target eUICC.

4. The method according to any of claims 1 to 3, wherein, before step b), generate profile data, is executed:
- the target eUICC lacks a network authentication key K specific or unique to the target eUICC; or/and
- the target eUICC contains pre-installed profile data except profile data in the form of a network authentication key K specific or unique to the target eUICC.

5. The method according to any of claims 1 to 4, wherein step b), generate the profile data, is executed triggered by step a), receive the MNO information.

6. The method according to any of claims 1 to 5, wherein the profile data generated in step b) in the target eUICC further comprise one or several of the following:
- OTA keys;
- Secure Channel keys;
- symmetric keys, particularly such for any purpose;
- asymmetric key pairs, particularly such for any purpose.

7. The method according to any of claims 1 to 6, wherein the MNO information is received in step a) from any of the following entities:
- a Local Profile Assistant, LPA, or an loT Profile Assistant, IPA;
- an SM-DP+ server;
- an OEM server or Operator server or EUM;
- a transmission chain including several of the above listed entities.

8. The method according to any of claims 1 to 7, wherein the profile data generated in step b) in the target eUICC are embodied as or include one or several of the following:
- one or several random numbers;
- derived profile data derived from one or several random numbers, denoted master key(s).

9. The method according to any of claims 1 to 8, wherein the network authentication key K generated in step b) in the target eUICC is generated by a key generation procedure comprising one or several of the following steps:
- establish the network authentication key K as a random number generated in the target eUICC;
- establish the network authentication key K as a function of a random number generated in the target eUICC and further key derivation data;
- provide the generated network authentication key K as a master key for the derivation of further keys which are specific or/and unique for the target eUICC, wherein the further keys comprise one or several of: OTA keys; Secure Channel keys; any other symmetric or asymmetric key;
- provide the generated network authentication key K as a key derived from a master key, which master key is also used for the derivation of further keys which are specific or/and unique for the target eUICC, wherein the further keys comprise one or several of: OTA keys; Secure Channel keys; any other symmetric or asymmetric key.

10. The method according to any of claims 1 to 9, wherein the profile data, or part thereof, exported from the target eUICC in step c) are exported in an encrypted form, encrypted with an export key.

11. The method according to claim 10, wherein the export key is embodied as one or several keys fulfilling one or several of the following features:
- an export key generated in the target eUICC;
- in the case where a Batch Bound Profile Package was received at the target eUICC, the same key with which the Batch Bound Profile Package was encrypted, or a key derived from said key with which the Batch Bound Profile Package was encrypted;
- random keys PPK-ENC and PPK-MAC according to SGP.22;
- session keys S-ENC and S-MAC according to SGP.22;
- an export key derived from one-time keys generated on the eUICC new for each export or/and other keys included in the Batch Bound Profile Package.

12. The method according to any of claims 1 to 11, further comprising, for at least some of the generated or/and received profile data, set or keep said at least part of the profile data in a blocked or disabled state, in which blocked or disabled state said profile data are not operable, and release or enable said blocked or disabled profile data upon occurrence of a specified event, wherein the specified event is one of the following:
- authentication, or first authentication, of the eUICC in a mobile network with the generated authentication key K;
- successful authentication, or first successful authentication, of the eUICC in a mobile network with the generated authentication key K;
- verification of the generated profile data by an external entity, which may be or include any or several of: the SM-DP+; the EUM.

13. The method according to any of claims 1 to 12, further comprising, after step e) f) generate a profile including the received authentication key K, at the external entity, or at an entity called by the external entity.

14. The method according to claim 13, wherein the generated profile further comprises one or several or all of the following further profile data:
- a subscriber identity (IMSI; SUPI; NAI);
- a profile number ICCID.

15. The method according to claim 13 or 14, further comprising one or several or all of the following steps:
g) download to the eUICC: the generated profile; or the generated profile excluding the profile data that were generated in the eUICC;
h) install the downloaded profile in the eUICC;
i) enable the installed profile in the eUICC.
